# EUROPEAN PATENT SPECIFICATION

(11) **EP 4 202 740 B1**
(45) Date of publication and mention of the grant of the patent: **06.05.2026**
(21) Application number: 22201180.1
(22) Date of filing: 12.10.2022
(51) Int. Cl.: G06F 21/54, G06F 21/51, G06F 21/70, G06F 21/60, G06F 21/79, H04L 9/08

(54) **PROCESS OBJECT RE-KEYING DURING PROCESS CREATION IN CRYPTOGRAPHIC COMPUTING**
REKEYING VON PROZESSOBJEKTEN WÄHREND DER PROZESSERSTELLUNG IN KRYPTOGRAFISCHER BERECHNUNG
MISE À JOUR DE CLÉ D'OBJET DE PROCESSUS PENDANT LA CRÉATION DE PROCESSUS DANS UN CALCUL CRYPTOGRAPHIQUE

(30) Priority: 24.12.2021 US 202117561828
(43) Date of publication of application: 28.06.2023
(73) Proprietor: INTEL Corporation, Santa Clara, CA 95054 (US)
(72) Inventor: GREWAL, Karanvir, Hillsboro, OR 97124 (US); DURHAM, David M., Beaverton, OR 97007 (US); LEMAY, Michael, Hilsboro, OR 97123 (US); SULTANA, Salmin, Hillsboro, OR 97124 (US); DEUTSCH, Sergej, Hillsboro, OR 97123 (US)
(74) Representative: Maiwald GmbH

(56) References cited:
- US-A1- 2020 159 675
- US-A9- 2017 185 531
- SIDDHARTHA CHHABRA ET AL: "SecureME", SUPERCOMPUTING, ACM, 2 PENN PLAZA, SUITE 701 NEW YORK NY 10121-0701 USA, 31 May 2011 (2011-05-31), pages 108 - 119, XP058003719, ISBN: 978-1-4503-0102-2, DOI: 10.1145/1995896.1995914

## Description

### BACKGROUND

Subject matter described herein relates generally to the field of computer security and more particularly to process re-keying during process creation in cryptographic capability computing.

An object-level granularity memory encryption system needs to change and refresh data encryption keys to prevent replay attacks and to defend against the wearing out of encryption keys or to separate parent and child processes. In Unix-like systems, a fork() system call creates a child process identical to the parent process, i.e., parent and child execute the same program, share physical pages and other resources. Whenever any of the parent/child processes want to modify a shared page, a Unix copy-on-write (CoW) mechanism allocates a new private physical page to the process that issued a write operation to the shared page. This way, eventually, the parent and child process may have separate address spaces for writable data.

Typically, child processes execute an exec*() instruction after a fork() instruction to reload the process with the new binary and address space. There are, however, fork() instruction only cases such as parent process spawning child worker processes (e.g., Apache httpd, dhclient) to perform various tasks in separate processes than the main process. In a fork() and exec*() model, new encryption keys may be initialized for the child at exec*(). Accordingly, techniques to assign new cryptographic keys to a fork() only child process considering copy on write may find utility and per-object encryption where multiple independent encrypted objects may reside on the same memory page.
Paper "Siddhartha Chhabra; et al.: SecureME: A Hardware-Software Approach to Full System Security. ICS '11: Proceedings of the international conference on Supercomputing, May 2011, Pages 108-119" relates to a hardware-software mechanism called SecureME, which provides a secure computing environment.
Document US 2020 159 675 A1 relates to measures against buffer overflow attacks, which may be caused by using an indirect address and which may allow an attacker to insert malicious code into a computer program.
Document US 2015 100 791 A1 relates to measures for protecting the privacy and integrity of application data.

### BRIEF DESCRIPTION OF THE DRAWINGS

The detailed description is described with reference to the accompanying figures.
Fig. 1 is a schematic, block diagram illustration of components of apparatus to implement process re-keying during process creation in cryptographic computing in accordance with some examples.
Fig. 2 is a schematic illustration of memory allocation in an implementation of process re-keying during process creation in cryptographic computing in accordance with some examples.
Fig. 3 is a schematic illustration of memory allocation in an implementation of process re-keying during process creation in cryptographic computing in accordance with some examples.
Fig. 4 is a diagram illustrating operations in a method to implement process re-keying during process creation in cryptographic computing in accordance with some examples.
Fig. 5 is a diagram illustrating operations in a method to implement data process re-keying during process creation in cryptographic computing in accordance with some examples.
Fig. 6 is a schematic illustration of a cryptographic pointer which may be used in a method to implement process re-keying during process creation in cryptographic computing in accordance with some examples.
Fig. 7 is a schematic illustration of a computing architecture which may be adapted to implement process re-keying during process creation in cryptographic computing in accordance with some examples.

### DETAILED DESCRIPTION

Described herein are exemplary systems and methods to implement process re-keying during process creation in cryptographic computing. The invention is defined in the independent claims. Preferred embodiments are defined in the dependent claims. In the following description, numerous specific details are set forth to provide a thorough understanding of various examples. However, it will be understood by those skilled in the art that the various examples may be practiced without the specific details. In other instances, well-known methods, procedures, components, and circuits have not been illustrated or described in detail so as not to obscure the examples.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on a transitory or non-transitory machine-readable (e.g., computer-readable) storage medium, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

As described briefly above, child processes may execute an exec*() instruction after a fork() instruction to reload itself with the new binary and address space. When there is a data object encryption key (or keys) for the process, a new key may be assigned to the child process where allocated objects are not shared with the parent process. There are, however, fork() instruction only cases such as parent process spawning child worker processes (e.g., Apache httpd, dhclient) to perform various tasks in separate processes than the main process, etc. In a fork + exec model, new keys may be initialized for the child at exec*(). Accordingly, techniques to assign new cryptographic keys to a fork() only child process considering copy-on-rite may find utility when each data object is encrypted with a data encryption key tweaked with information from a pointer or capability that references said data object. The system call clone() is a generic version of fork() offering finer controls through **clone_flags** arguments. The systems and methods described herein for fork() are also applicable to clone(). Other operating systems may supply different system calls or combinations of system calls besides fork() and exec*() to create new address spaces, and the systems and methods described herein are also applicable to those other system calls.

To address these and other issues, described herein are systems and methods to implement process re-keying during process creation in cryptographic computing. Some examples described herein implement a "magic marker" based system in which, on copy-on-write, put magic markers (special data values) in the child private page without copying and or re-encrypting data. On write to an object in a shared page, the object is copied in the child-private page and re-encrypted with the child key as with copy-on-write, while the rest of the child copy of the page is filled with magic marker data values. On read of another object using a cryptographic address (or pointer) on the child's page, the magic marker in the child page may be used to identify a data object yet-to-be-copied from the previously shared parent page, decrypt the object from the parent page using the pointer tweak and parent process key and re-encrypt the object with the child key and pointer tweak. Herein, cryptographic address pointers may contain information relating to the object size, bounds, version, etc. used as a tweak for the data encryption along with the data encryption key in accordance with cryptographic capability computing.

Other examples described herein implement an allocation metadata-based system which, on copy-on-write, copy a shared encrypted page to a child-private page and re-encrypt the objects in the child page with child data key and <linear address, bound, version> metadata of each object allocation. In some examples the process may leverage a heap manager, a memory tagging technology (MTT) tag table, hardware address sanitizer (HWAsan), Memory Protection eXtensions (MPX), or other in-memory structures to retrieve such metadata and the objects encrypted using said metadata (for example, as a cryptographic tweak) along with the data encryption key. Some examples may also utilize bucketed allocation information in case of allocators that group similarly sized allocations into identically sized slots where the metadata used to tweak the per-object encryption may be inferred.

Further examples may implement a linear inline metadata (LIM) based system which, on copy-on-write, copies a shared encrypted page from a parent to a child private page and re-encrypts objects on-demand on linear inline metadata access faults. LIM places the metadata within an object's allocation so it may be retrieved along with the object data from the same region of memory occupied by the data object.

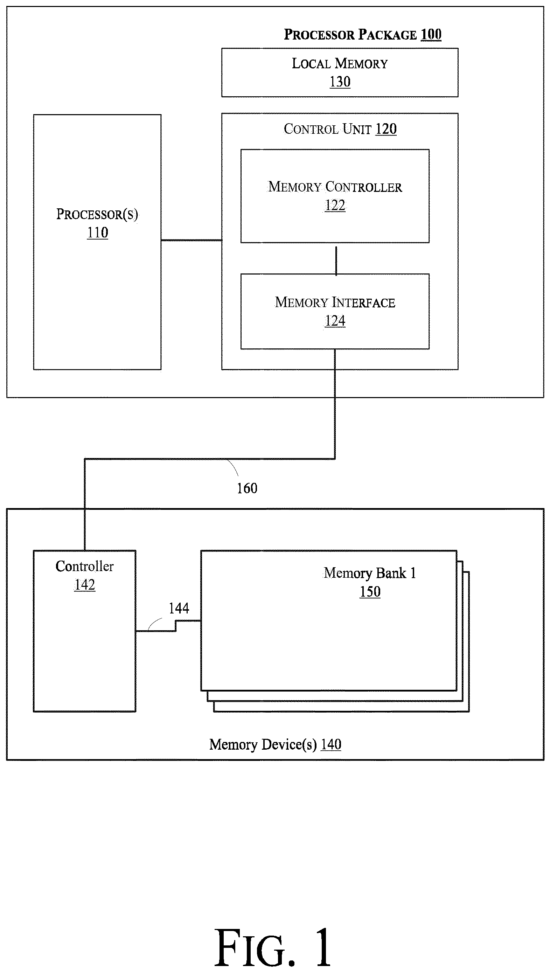

Subject matter described herein provides a mechanism for data object level granular data encryption and provides a method of rekeying such encrypted object data from parent to child processes using conventional forking mechanisms. To provide data object level granularity of memory encryption, an encoded cryptographic pointer (aka cryptographic address) is used to tweak the data encryption per data object allocation (e.g., based on allocation size, location, object type and/or version). Subject matter described herein defines how to achieve both per-data object memory encryption while also allowing re-keying and key refresh within the context of forking processes. Further structural and methodological details are relating to cryptographic computing are described below with reference to Fig. 1 through Fig. 8, below.

Fig. 1 is a schematic, block diagram illustration of components of apparatus to implement process re-keying during process creation in cryptographic computing in accordance with some examples. Referring to Fig. 1, in some examples a processor 100 may comprise one or more processors 110 coupled to a control unit 120 and a local memory 130. Control unit 120 comprises a memory controller 122 and a memory interface 124.

Memory interface 124 is coupled to one or more remote memory devices 140 by a communication bus 160. Memory device 140 may comprise a controller 142 and one or more memory banks 150. In various examples, at least some of the memory banks 150 may be implemented using nonvolatile memory, e.g., phase change memory, ferroelectric random-access memory (FeTRAM), nanowire-based non-volatile memory, memory that incorporates memristor technology, a static random access memory (SRAM), three dimensional (3D) cross point memory such as phase change memory (PCM), spin-transfer torque memory (STT-RAM) or NAND memory. In some examples the memory device(s) 140 may comprise one or more nonvolatile direct in-line memory modules (NVDIMMs) coupled to a memory channel 144 which provides a communication link to controller 142. The specific configuration of the memory bank(s) 150 in the memory device(s) 140 is not critical.

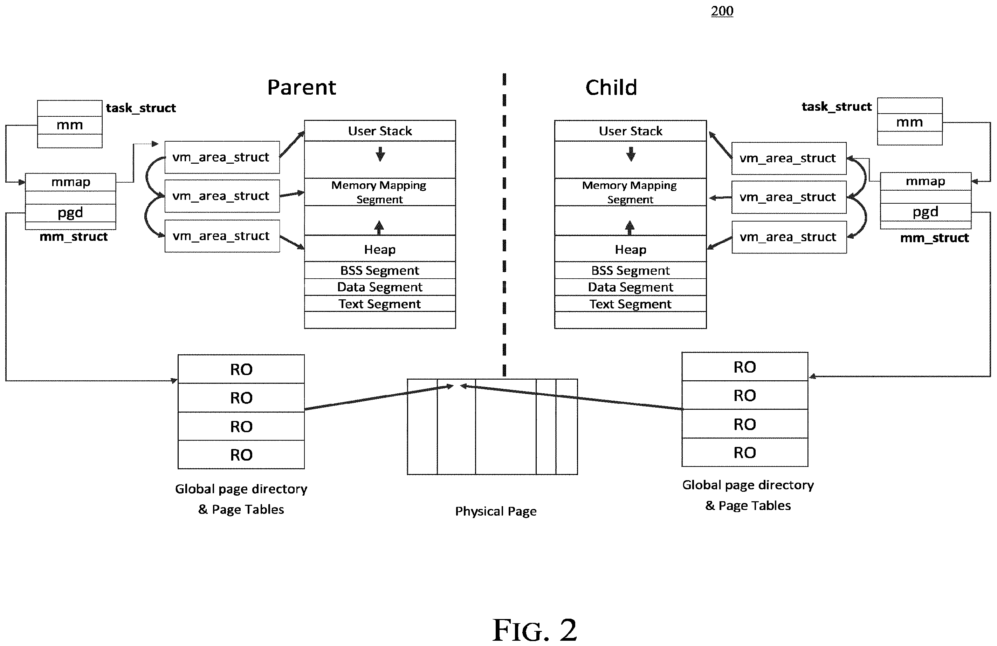

Fig. 2 is a schematic illustration of memory allocation 200 in an implementation of process re-keying during process creation in cryptographic computing in accordance with some examples. Referring to Fig. 2, the fork() system call creates separate kernel data structures (e.g. process descriptor, memory descriptor, page table data structures, etc. ) and kernel stack for the child process. For efficiency reasons, however, the operating system copies only the page table entries from parent to the child; the actual physical pages of memory are not duplicated. Thus, after a fork() operation, parent and child processes have different virtual memory structures, but they point to the same physical pages for code, stack, heap, etc. The shared physical page(s) are marked as read-only in both the parent and child processes. If either process wants to write to a shared page, the operating system allocates a new, private physical page for the process, updates the page table entry, sets the right read-write-execute (rwx) permission for the page (copy-on-write), and copies data from the shared page to the new process private page. This way, eventually, the parent and child process may have separate address spaces for writable data.

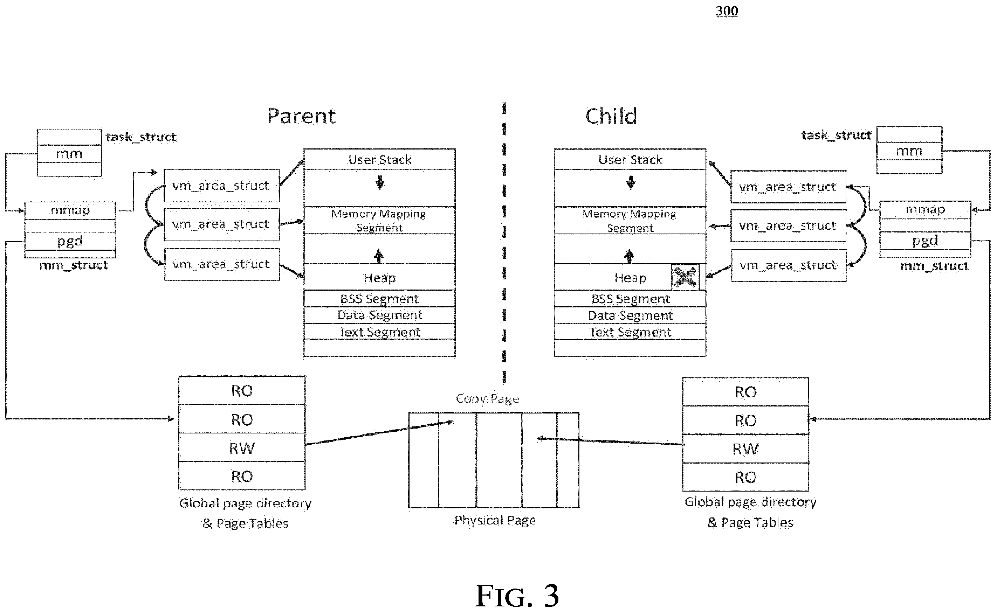

Fig. 3 is a schematic illustration of memory allocation 300 in an implementation of process re-keying during process creation in cryptographic computing in accordance with some examples. More particularly, Fig. 3 illustrates the address space after execution of both the parent process and the child process after execution of a copy-on-write. The "X" over the heap in the child address space in this example illustrates that the child attempted a write to a heap page while it was shared, which caused the OS to perform a copy-on-write operation that led to the illustrated address spaces. As illustrated in Fig. 3, the virtual memory structures of the parent process and the child process now point to separate physical pages.

To facilitate process code and/or data isolation, described herein are techniques for key management on fork() only, i.e., when to assign new code and/or data keys to a child process and how to implement a copy-on-write after fork(). In some examples, the child process keeps the parent code and data key until execution of copy-on-write. In some cases, parent data pages may not be shared with child based on one or more clone flags. In this case and on copy-on-write, techniques to assign separate keys for parent, child, and shared parent-child pages need to be implemented. Some implementations address encryption key management problems by allowing the parent process and the child process to share the same encryption keys for data and/or code. This poses a key wear-out problem as in which a remote attacker can gain multiple, potentially unlimited, tries to brute-force pointer authentication code (PAC) values since all child processes will have the same key, including the ones that are forked to replace the ones that die due to address faults. Key sharing may also afford an adversary the opportunity to forge pointers and data that is valid in a victim process, which they may be able to use to craft an exploit. Conversely, key sharing may enable an adversary to decrypt encrypted pointers/data and extract secret key/data from a victim process. Various techniques described herein address a threat model in which processes created via fork()-only (i.e., without being followed immediately by exec*()) share the same encryption keys for code and/or data in cryptographic computing. A fundamental issue in this context is the cryptographic key lifetime, i.e. (i) how long a cryptographic key be kept alive, (ii) how frequently cryptographic keys can be reused. (iii) whether multiple processes sharing the same keys accelerates key wear-out.

Potential security adversaries include a malicious operating system, a malicious process other than parent/child, colluding malicious parent process and operating system, and vulnerable shared libraries. The security goal is to ensure that malicious processes and/or operating systems (with or without colluding with each other) cannot read/modify data, tamper with code and/or execution of a benign process. In a typical key wear-out scenario, a malicious operating system or malicious process other than the parent/child may conduct a ciphertext-only attack to extract secret data and/or key. A malicious parent process may collude with a malicious operating system to conduct a Known/Chosen - plaintext attack in which the malicious parent process knows plaintext, the operating system knows corresponding ciphertext, and they collude to extract secret data and/or key(s) from the child process. Untrusted shared libraries also pose security risk when the parent process specifies a shared library function as an entry point for the child process, leading to a possibility of shared library getting access to parent and/or child keys.

To address these and other issues, described herein are systems and methods to assign the child process new cryptographic keys for code and/or data and to have the child process use a private data key to re-encrypt data while copying from a shared page to a newly allocated private page on copy-on-write. Multiple techniques are described herein.

### Re-encrypt Objects on-Write, Use Magic Marker to Track/Re-encrypt on-Read

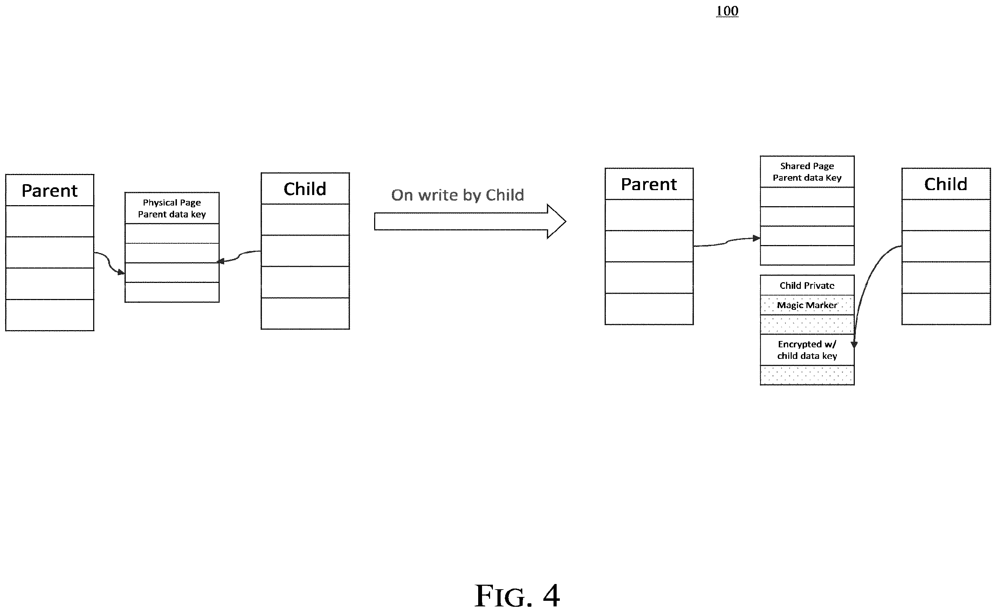

Fig. 4 is a diagram illustrating operations in a method 400 to implement process re-keying during process creation in cryptographic computing in accordance with some examples. Referring to Fig. 4, on the first write by the child process, the parent page becomes non-accessible to the child process. In addition, a new page is allocated for the child process and the virtual memory to physical memory mapping is updated. The object accessed by the cryptographic pointer is re-encrypted with the child data key using the cryptographic pointer as a tweak, and the rest of the page is filled with a unique data value (e.g., a 8 byte aligned value or code), referred to herein as a "magic marker" or "magic marker data" that indicates to a processor to copy the actual data from the corresponding data location in the parent process or causes the processor to trigger an exception to software so it can copy the data replacing the magic marker value with the actual data magic marker. In some examples the data may be copied on-demand when accessed, in part because the processor only knows the cryptographic pointer value when it is used to access some data (at load or store time). Thus, the page mapping for the child process needs to keep a back pointer to the parent's page until all the data is decrypted using the parent's key, copied and re-encrypted using the child's key in the child's page. Similarly, the exception will cause software to perform the same actions. When the child accesses a magic marker data value, the processor will trigger an exception to invoke a software routine that will identify the parent page, decrypt the data using the parent's process key and the cryptographic pointer (cryptographic address) used to access the page as a per-object tweak, and then copy and re-encrypt the data to the child's page using the same per-object tweak and the child's key.

Subsequently, on a write by the child process, the data to be written is encrypted with the cryptographic key assigned to the child data and the encrypted data is written to the child process page. In this case, the parent shared page does not need to be accessed. Thus, when software uses a cryptographic pointer (i.e., cryptographic address) to access the magic marker data, the processor will know the pointer value and can therefore can decrypt the original data in the physical page for the parent process that was encrypted with the pointer acting as a cryptographic tweak, decrypting the referenced data from the parent using the parent process key and pointer tweak, and re-encrypting the data using the child process key and the same pointer tweak. On the first read by the child process to another object, the corresponding data in the child page shows magic marker, which indicates that the data still needs to be copied from the parent page. In some examples this takes place on-demand with each load operation, as each magic marker value is accessed by a cryptographic pointer, the data is copied from the parent page, decrypted using the pointer tweak and parent key, copied, and then re-encrypted using the pointer tweak and child key replacing the accessed magic marker value with the copied data

In some examples, when all the parent/child processes get private pages on copy-on-write, the shared parent page may not be owned by any process but needs to be kept alive for copy-on-read. The parent shared page needs to be kept alive until all the parent/child processes have finished copying data from it. In this circumstance, a pointer may be set to the parent page and the process may be tracked to determine when to free the page. For example, the processor may have a register (e.g. similar to control register CR3) that references the parent's page table structure so the processor can walk the parent's page table to find the parent's physical page when a child's page access (load) encounters a magic marker value on the partially copied child page.

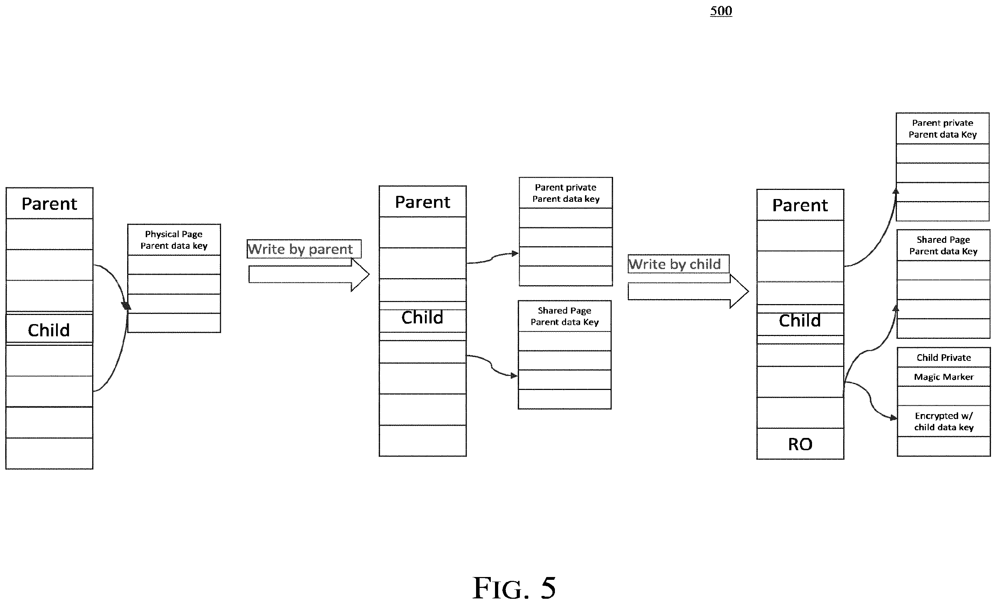

Fig. 5 is a diagram illustrating operations in a method 500 to implement data process re-keying during process creation in cryptographic computing in accordance with some examples. Referring to Fig. 5, on copy-on-write, the child process maps a shared page within a specific linear address range in the child process memory. On a magic marker read, the child process uses vm_area_struct list to find the virtual/physical address of a shared page. The vm_area_struct entity for shared pages specifies the virtual address mapping of <child private, shared> page. The existing reference count mechanism for the shared page determines when to free the page.

### Re-encrypt Objects on Copy-on-Write Using Allocation Metadata

In some examples, on copy-on-write, the child process copies the shared encrypted page to a child-private page and re-encrypts all the objects in the child page with the child data key. When a process is forked, pages may be initially set to "not present" via the new process's page tables. When an attempt is made to access such a page, either the original process's encryption key can be used to read the data from the parent process's page, or on a data write, the copy-on-write will start with the original process's page data and <bound, version> information of the objects allocated in that page.

The data from the parent's page is decrypted using the parent process's key and re-encrypted for the new page using the child process's key and the object bounds and linear location of the allocation in memory as a cryptographic tweak. The latter is the same information needed to encode the cryptographic pointers used to reference the allocation (i.e., location/linear address, slot size and version). Knowing how to reconstruct the cryptographic pointer without observing the pointer value allows the same tweak to be generated to encrypt the allocation data in the newly allocated page using the new process's key. This process may be repeated for each object in the page.

One challenge in this technique is to get the <linear address, bound, version> (used as a cryptographic tweak) of all the allocations in the parent page to correctly decrypt the objects and then re-encrypt them with the child key. In some examples, the heap manager may be utilized as it currently stores a chunk size parameter (chunk = allocation + metadata) along with other metadata for every allocation. The heap manager may be extended to store allocation size, version, etc. metadata for the objects. Another technique is to maintain a per-process context table to store such metadata for each allocation.

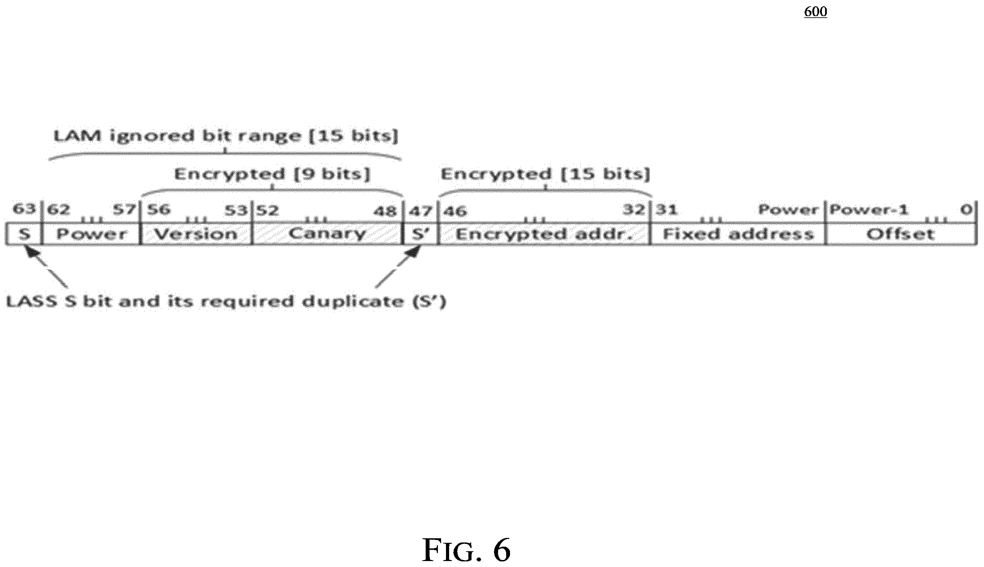

Alternatively, a memory tagging technology (MTT) table (or data corruption detection DCD table or memory corruption detection MCD table) may be leveraged by using a tag table to find <bound, version> of allocations in the parent page. Fig. 6 is a schematic illustration of a cryptographic pointer 600 which may be used in a method to implement process re-keying during process creation in cryptographic computing in accordance with some examples. In some examples, bounds (allocation or slot size) may be explicitly defined in the MTT table or may be obtained deterministically by observing a run of the same tag values (i.e., version), followed by a different tag value (i.e., version) indicating the end of the run. This implicitly identifies the object bounds using in-memory tags from which the cryptographic tweak is derived. A run of in-memory tag versions may be initialized during an allocation (e.g., malloc or New) for a new object. By observing the version and run of tags with that same version value (or explicit bounds), the memory may be decrypted from the parent's page using the encryption key for the parent process and re-encrypted for the new page using the encryption key for the child process and the inferred object bounds and linear location of the allocation in memory.

Advantageously, this use of MTT does not require the processor to access the MTT table on every load/store operation of the processor, but only on the copy-on-write or initial page access after forking a process, thus offering a performance advantage and reduced complexity for the processor (which does not need to access the tag table). Instead, the data is encrypted based on the cryptographic pointer tweak as determined by the tag table information. The MTT may be operated in store-only mode to reduce performance overheads, relying on data encryption for confidentiality of loads. In other examples memory tagging may be operated with physically mapped tags in an imprecise mode, again for reduced performance overhead, while relying on cryptography for confidentiality.

Another example may be based on Hardware Address Sanitizer (HWAsan), a software defined table, instead of MTT, with the primary difference being that only MTT defines implicit tag table checks during memory accesses. HWAsan relies on compiler instrumentation instead. Copy Encrypted Page on Copy-on-Write and Re-encrypt Objects on-Access Using Linear Inline Metadata (LIM)

In some examples, on copy-on-write, the child process copies the shared parent page, still encrypted with the parent key, to a child-private page. On data access to the child-private page, a linear inline metadata (LIM) access fault occurs. If decrypting the metadata slot with the parent data key succeeds, then precise allocation bounds are known and may be used to re-encrypt data with the child data key. In this case, the parent data key and child data key should be stored in memory. This can be made more precise by including an authentication code, either implicit or explicit, within each LIM metadata slot to more reliably identify slots that need to be re-encrypted. When accessing the allocation, the processor can check whether the authentication code over the metadata is still valid. If not, the wrong key is being used to access the metadata, which indicates the allocation and its metadata need to be re-encrypted on-demand. An extension that could permit re-encryption immediately upon copy on write is to indicate valid metadata locations using an out-of-band indicator, e.g. a tag bit for each potential metadata location. The operating system could then scan the memory being copied to locate set tag bits and re-encrypt each object covered by metadata tagged in that way. If the operating system proactively re-encrypts the entire page being copied, it may also need to scan forward and backward from that page in linear memory until it finds sufficient metadata items to cover every byte within the initial page being copied and copy those pages as well. This may transitively require copies for additional pages. Even if the operating system operates on just the objects that have been accessed rather than entire pages, objects may span page boundaries, which may necessitate extending the re-encryption operation as well as copy operations as needed for the underlying memory within the full bounds of the object being re-encrypted. This is due to the encryption status of the object being determined from its metadata, of which there may be just a single instance for the entire object. In other embodiments, metadata may be replicated at intervals within the object to avoid needing to re-encrypt it all at once.

### Re-encrypt Objects on Copy-on-Write Using Bucketed Allocation Information

Some allocators group similarly sized allocations into identically sized slots. This permits the bounds of every allocation slot to be determined simply from the address of any byte within an allocation. This can permit the operating system to reconstitute the encrypted pointer for each allocation on a page being copied, which in turn permits the data to be re-encrypted immediately upon copy on write. An advantage of this compared to linear inline metadata (LIM)-based approaches is that it does not require re-encrypting entire allocations at once. That is needed for linear inline metadata, due to the non-redundant metadata being the indicator of when re-encryption is required. However, there are some variations of linear inline metadata with multiple metadata items, e.g., one per page, in which case only the corresponding unit of memory needs to be re-encrypted at once. The bucketed approach also offers some advantage over the MTT approach, even though the MTT approach does not require the entire allocation to be re-encrypted at once. This is because even though a multi-part re-encryption approach may be used, it may still require an expensive tag table scan operation across the entire allocation to identify object boundaries for the purpose of re-constituting the encrypted pointer

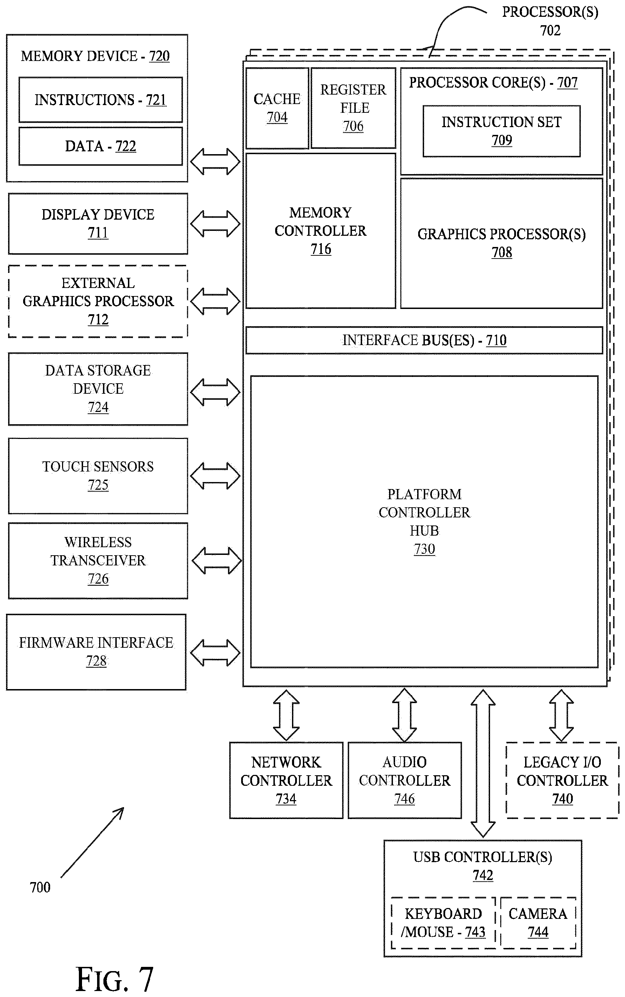

Fig. 7 illustrates an embodiment of an exemplary computing architecture that may be suitable for implementing various embodiments as previously described. In various embodiments, the computing architecture 700 may comprise or be implemented as part of an electronic device. In some embodiments, the computing architecture 700 may be representative, for example of a computer system that implements one or more components of the operating environments described above. In some embodiments, computing architecture 700 may be representative of one or more portions or components of a digital signature signing system that implement one or more techniques described herein. The embodiments are not limited in this context.

As used in this application, the terms "system" and "component" and "module" are intended to refer to a computer-related entity, either hardware, a combination of hardware and software, software, or software in execution, examples of which are provided by the exemplary computing architecture 700. For example, a component can be, but is not limited to being, a process running on a processor, a processor, a hard disk drive, multiple storage drives (of optical and/or magnetic storage medium), an object, an executable, a thread of execution, a program, and/or a computer. By way of illustration, both an application running on a server and the server can be a component. One or more components can reside within a process and/or thread of execution, and a component can be localized on one computer and/or distributed between two or more computers. Further, components may be communicatively coupled to each other by various types of communications media to coordinate operations. The coordination may involve the uni-directional or bi-directional exchange of information. For instance, the components may communicate information in the form of signals communicated over the communications media. The information can be implemented as signals allocated to various signal lines. In such allocations, each message is a signal. Further embodiments, however, may alternatively employ data messages. Such data messages may be sent across various connections. Exemplary connections include parallel interfaces, serial interfaces, and bus interfaces.

The computing architecture 700 includes various common computing elements, such as one or more processors, multi-core processors, co-processors, memory units, chipsets, controllers, peripherals, interfaces, oscillators, timing devices, video cards, audio cards, multimedia input/output (I/O) components, power supplies, and so forth. The embodiments, however, are not limited to implementation by the computing architecture 700.

As shown in Figure 7, the computing architecture 700 includes one or more processors 702 and one or more graphics processors 708, and may be a single processor desktop system, a multiprocessor workstation system, or a server system having a large number of processors 702 or processor cores 707. In on embodiment, the system 700 is a processing platform incorporated within a system-on-a-chip (SoC or SOC) integrated circuit for use in mobile, handheld, or embedded devices.

An embodiment of system 700 can include, or be incorporated within a server-based gaming platform, a game console, including a game and media console, a mobile gaming console, a handheld game console, or an online game console. In some embodiments system 700 is a mobile phone, smart phone, tablet computing device or mobile Internet device. Data processing system 700 can also include, couple with, or be integrated within a wearable device, such as a smart watch wearable device, smart eyewear device, augmented reality device, or virtual reality device. In some embodiments, data processing system 700 is a television or set top box device having one or more processors 702 and a graphical interface generated by one or more graphics processors 708.

In some embodiments, the one or more processors 702 each include one or more processor cores 707 to process instructions which, when executed, perform operations for system and user software. In some embodiments, each of the one or more processor cores 707 is configured to process a specific instruction set 709. In some embodiments, instruction set 709 may facilitate Complex Instruction Set Computing (CISC), Reduced Instruction Set Computing (RISC), or computing via a Very Long Instruction Word (VLIW). Multiple processor cores 707 may each process a different instruction set 709, which may include instructions to facilitate the emulation of other instruction sets. Processor core 707 may also include other processing devices, such a Digital Signal Processor (DSP).

In some embodiments, the processor 702 includes cache memory 704. Depending on the architecture, the processor 702 can have a single internal cache or multiple levels of internal cache. In some embodiments, the cache memory is shared among various components of the processor 702. In some embodiments, the processor 702 also uses an external cache (e.g., a Level-3 (L3) cache or Last Level Cache (LLC)) (not shown), which may be shared among processor cores 707 using known cache coherency techniques. A register file 706 is additionally included in processor 702 which may include different types of registers for storing different types of data (e.g., integer registers, floating point registers, status registers, and an instruction pointer register). Some registers may be general-purpose registers, while other registers may be specific to the design of the processor 702.

In some embodiments, one or more processor(s) 702 are coupled with one or more interface bus(es) 710 to transmit communication signals such as address, data, or control signals between processor 702 and other components in the system. The interface bus 710, in one embodiment, can be a processor bus, such as a version of the Direct Media Interface (DMI) bus. However, processor busses are not limited to the DMI bus, and may include one or more Peripheral Component Interconnect buses (e.g., PCI, PCI Express), memory busses, or other types of interface busses. In one embodiment the processor(s) 702 include an integrated memory controller 716 and a platform controller hub 730. The memory controller 716 facilitates communication between a memory device and other components of the system 700, while the platform controller hub (PCH) 730 provides connections to I/O devices via a local I/O bus.

Memory device 720 can be a dynamic random-access memory (DRAM) device, a static random-access memory (SRAM) device, flash memory device, phase-change memory device, or some other memory device having suitable performance to serve as process memory. In one embodiment the memory device 720 can operate as system memory for the system 700, to store data 722 and instructions 721 for use when the one or more processors 702 executes an application or process. Memory controller hub 716 also couples with an optional external graphics processor 712, which may communicate with the one or more graphics processors 708 in processors 702 to perform graphics and media operations. In some embodiments a display device 711 can connect to the processor(s) 702. The display device 711 can be one or more of an internal display device, as in a mobile electronic device or a laptop device or an external display device attached via a display interface (e.g., DisplayPort, etc.). In one embodiment the display device 711 can be a head mounted display (HMD) such as a stereoscopic display device for use in virtual reality (VR) applications or augmented reality (AR) applications.

In some embodiments the platform controller hub 730 enables peripherals to connect to memory device 720 and processor 702 via a high-speed I/O bus. The I/O peripherals include, but are not limited to, an audio controller 746, a network controller 734, a firmware interface 728, a wireless transceiver 726, touch sensors 725, a data storage device 724 (e.g., hard disk drive, flash memory, etc.). The data storage device 724 can connect via a storage interface (e.g., SATA) or via a peripheral bus, such as a Peripheral Component Interconnect bus (e.g., PCI, PCI Express). The touch sensors 725 can include touch screen sensors, pressure sensors, or fingerprint sensors. The wireless transceiver 726 can be a Wi-Fi transceiver, a Bluetooth transceiver, or a mobile network transceiver such as a 3G, 4G, or Long Term Evolution (LTE) transceiver. The firmware interface 728 enables communication with system firmware, and can be, for example, a unified extensible firmware interface (UEFI). The network controller 734 can enable a network connection to a wired network. In some embodiments, a high-performance network controller (not shown) couples with the interface bus 710. The audio controller 746, in one embodiment, is a multi-channel high definition audio controller. In one embodiment the system 700 includes an optional legacy I/O controller 740 for coupling legacy (e.g., Personal System 2 (PS/2)) devices to the system. The platform controller hub 730 can also connect to one or more Universal Serial Bus (USB) controllers 742 connect input devices, such as keyboard and mouse 743 combinations, a camera 744, or other USB input devices.

The above Detailed Description includes references to the accompanying drawings, which form a part of the Detailed Description. The drawings show, by way of illustration, specific embodiments that may be practiced. These embodiments are also referred to herein as "examples." Such examples may include elements in addition to those shown or described. However, also contemplated are examples that include the elements shown or described. Moreover, also contemplated are examples using any combination or permutation of those elements shown or described (or one or more aspects thereof), either with respect to a particular example (or one or more aspects thereof), or with respect to other examples (or one or more aspects thereof) shown or described herein.

The terms "logic instructions" as referred to herein relates to expressions which may be understood by one or more machines for performing one or more logical operations. For example, logic instructions may comprise instructions which are interpretable by a processor compiler for executing one or more operations on one or more data objects. However, this is merely an example of machine-readable instructions and examples are not limited in this respect.

The terms "computer readable medium" as referred to herein relates to media capable of maintaining expressions which are perceivable by one or more machines. For example, a computer readable medium may comprise one or more storage devices for storing computer readable instructions or data. Such storage devices may comprise storage media such as, for example, optical, magnetic or semiconductor storage media. However, this is merely an example of a computer readable medium and examples are not limited in this respect.

The term "logic" as referred to herein relates to structure for performing one or more logical operations. For example, logic may comprise circuitry which provides one or more output signals based upon one or more input signals. Such circuitry may comprise a finite state machine which receives a digital input and provides a digital output, or circuitry which provides one or more analog output signals in response to one or more analog input signals. Such circuitry may be provided in an application specific integrated circuit (ASIC) or field programmable gate array (FPGA). Also, logic may comprise machine-readable instructions stored in a memory in combination with processing circuitry to execute such machine-readable instructions. However, these are merely examples of structures which may provide logic and examples are not limited in this respect.

Some of the methods described herein may be embodied as logic instructions on a computer-readable medium. When executed on a processor, the logic instructions cause a processor to be programmed as a special-purpose machine that implements the described methods. The processor, when configured by the logic instructions to execute the methods described herein, constitutes structure for performing the described methods. Alternatively, the methods described herein may be reduced to logic on, e.g., a field programmable gate array (FPGA), an application specific integrated circuit (ASIC) or the like.

In the description and claims, the terms coupled and connected, along with their derivatives, may be used. In particular examples, connected may be used to indicate that two or more elements are in direct physical or electrical contact with each other. Coupled may mean that two or more elements are in direct physical or electrical contact. However, coupled may also mean that two or more elements may not be in direct contact with each other, but yet may still cooperate or interact with each other.

Reference in the specification to "one example" or "some examples" means that a particular feature, structure, or characteristic described in connection with the example is included in at least an implementation. The appearances of the phrase "in one example" in various places in the specification may or may not be all referring to the same example.

The above description is intended to be illustrative, and not restrictive. For example, the above-described examples (or one or more aspects thereof) may be used in combination with others. Other embodiments may be used, such as by one of ordinary skill in the art upon reviewing the above description. The Abstract is to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with each claim standing on its own as a separate embodiment. The scope of the embodiments disclosed herein is to be determined with reference to the appended claims, along with the full scope of equivalents to which such claims are entitled.

Although examples have been described in language specific to structural features and/or methodological acts, it is to be understood that claimed subject matter may not be limited to the specific features or acts described. Rather, the specific features and acts are disclosed as sample forms of implementing the claimed subject matter.

## Claims

1. An apparatus, comprising processing circuitry (702) to:
detect execution of a fork() operation in a cryptographic computing system that generates a parent process and a child process;
assign a parent kernel data structure to the parent process and a child kernel data structure to the child process;
detect, in the child process, a write operation comprising write data and a cryptographic target address, the write data consisting of an object, and in response to the write operation:
block access to a corresponding page in the parent process;
allocate a new physical child-private page in memory (704, 720) for the child process;
copy the write data, i.e. the object that is re-encrypted with a cryptographic key unique to the child process, to the new physical child-private page; and
fill the rest of the new physical child-private page in memory (704, 720) with magic marker data.

2. The apparatus of claim 1,
wherein the magic marker data comprises a unique code that causes the processor to:
decrypt data from the corresponding page in the parent process using a cryptographic key unique to the parent process;
encrypt the data from the corresponding page in the parent process using the cryptographic key unique to the child process; and
write the data from the corresponding page in the parent process to the new physical page in memory (704, 720) for the child process.

3. The apparatus of any one of claims 1 - 2,
wherein the magic marker data comprises a unique code that causes the processor to:
trigger an exception in a software process.

4. The apparatus of any one of claims 1 - 3, the processing circuitry (702) to:
detect a copy-on-write in the child process; and
allocate a new private physical page in memory (704, 720) for the parent process.

5. The apparatus of any one of claims 1 - 4, the processing circuitry (702) to:
encrypt the data from the corresponding page in the parent process using allocation metadata unique to the child process.

6. The apparatus of any one of claims 1 - 5, the processing circuitry (702) to:
encrypt the data from the corresponding page in the parent process in response to a linear inline metadata, LIM, access fault in the child process.

7. The apparatus of any one of claims 5 - 6,
wherein valid metadata locations are indicated using an out-of-band indicator for each metadata location.

8. A method, comprising:
detecting execution of a fork() operation in a cryptographic computing system that generates a parent process and a child process;
assigning a parent kernel data structure to the parent process and a child kernel data structure to the child process;
detecting, in the child process, a write operation comprising write data and a cryptographic target address, the write data consisting of an object, and in response to the write operation:
blocking access to a corresponding page in the parent process;
allocating a new physical child-private page in memory (704, 720) for the child process;
copying the write data, i.e. the object that is re-encrypted with a cryptographic key unique to the child process, to the new physical child-private page; and
filling the rest of the new physical child-private page in memory (704, 720) with magic marker data.

9. The method of claim 8, further comprising:
decrypting data from the corresponding page in the parent process using a cryptographic key unique to the parent process;
encrypting the data from the corresponding page in the parent process using the cryptographic key unique to the child process; and
writing the data from the corresponding page in the parent process to the new physical page in memory (704, 720) for the child process.

10. The method of any one of claims 8 - 9, further comprising:
triggering an exception in a software process.

11. The method of any one of claims 8 - 10, further comprising:
encrypting the data from the corresponding page in the parent process using allocation metadata unique to the child process.

12. The method of any one of claims 8 - 11, further comprising:
detecting a copy-on-write in the child process; and
allocating a new private physical page in memory (704, 720) for the parent process.

13. The method of any one of claims 8 - 12, further comprising:
encrypting the data from the corresponding page in the parent process in response to a linear inline metadata, LIM, access fault in the child process.

14. The method of any one of claims 11 or 13,
wherein valid metadata locations are indicated using an out-of-band indicator for each metadata location.

## Patentansprüche

1. Vorrichtung, umfassend Verarbeitungsschaltlogik (702), die dazu ausgelegt ist:
die Ausführung einer fork()-Operation in einem kryptographischen Rechensystem zu detektieren, das einen Elternprozess und einen Kindprozess erzeugt;
dem Elternprozess eine Eltern-Kernel-Datenstruktur und dem Kindprozess eine Kind-Kernel-Datenstruktur zuzuweisen;
in dem Kindprozess eine Schreiboperation zu detektieren, die Schreibdaten und eine kryptographische Zieladresse umfasst, wobei die Schreibdaten aus einem Objekt bestehen, und als Reaktion auf die Schreiboperation:
einen Zugriff auf eine entsprechende Seite in dem Elternprozess zu sperren;
für den Kindprozess eine neue physische für den Kindprozess private Seite im Speicher (704, 720) zuzuweisen;
die Schreibdaten, d. h. das Objekt, das mit einem für den Kindprozess eindeutigen kryptographischen Schlüssel erneut verschlüsselt wird, auf die neue physische für den Kindprozess private Seite zu kopieren; und
den Rest der neuen physischen für den Kindprozess privaten Seite im Speicher (704, 720) mit Magic-Marker-Daten zu füllen.

2. Vorrichtung nach Anspruch 1,
wobei die Magic-Marker-Daten einen eindeutigen Code umfassen, der den Prozessor dazu veranlasst:
Daten von der entsprechenden Seite in dem Elternprozess unter Verwendung eines für den Elternprozess eindeutigen kryptographischen Schlüssels zu entschlüsseln;
die Daten von der entsprechenden Seite in dem Elternprozess unter Verwendung des für den Kindprozess eindeutigen kryptographischen Schlüssels zu verschlüsseln; und
die Daten von der entsprechenden Seite in dem Elternprozess auf die neue physische Seite im Speicher (704, 720) für den Kindprozess zu schreiben.

3. Vorrichtung nach einem der Ansprüche 1-2,
wobei die Magic-Marker-Daten einen eindeutigen Code umfassen, der den Prozessor dazu veranlasst:
in einem Softwareprozess eine Ausnahme auszulösen.

4. Vorrichtung nach einem der Ansprüche 1 - 3, wobei die Verarbeitungsschaltlogik (702) dazu ausgelegt ist:
ein Copy-on-Write in dem Kindprozess zu detektieren; und
für den Elternprozess eine neue physische für den Elternprozess private Seite im Speicher (704, 720) zuzuweisen.

5. Vorrichtung nach einem der Ansprüche 1 - 4, wobei die Verarbeitungsschaltlogik (702) dazu ausgelegt ist:
die Daten von der entsprechenden Seite in dem Elternprozess unter Verwendung von dem Kindprozess eindeutig zugeordneten Allokationsmetadaten zu verschlüsseln.

6. Vorrichtung nach einem der Ansprüche 1 - 5, wobei die Verarbeitungsschaltlogik (702) dazu ausgelegt ist:
die Daten von der entsprechenden Seite in dem Elternprozess als Reaktion auf einen Zugriffsfehler in Bezug auf lineare Inline-Metadaten, LIM, in dem Kindprozess zu verschlüsseln.

7. Vorrichtung nach einem der Ansprüche 5-6,
wobei gültige Metadatenpositionen unter Verwendung eines Out-of-Band-Indikators für jede Metadatenposition angezeigt werden.

8. Verfahren, umfassend:
Detektieren der Ausführung einer fork()-Operation in einem kryptographischen Rechensystem, das einen Elternprozess und einen Kindprozess erzeugt;
Zuweisen einer Eltern-Kernel-Datenstruktur zu dem Elternprozess und einer Kind-Kernel-Datenstruktur zu dem Kindprozess;
Detektieren, in dem Kindprozess, einer Schreiboperation, die Schreibdaten und eine kryptographische Zieladresse umfasst, wobei die Schreibdaten aus einem Objekt bestehen, und als Reaktion auf die Schreiboperation:
Sperren eines Zugriffs auf eine entsprechende Seite in dem Elternprozess;
Zuweisen einer neuen physischen für den Kindprozess privaten Seite im Speicher (704, 720) zu dem Kindprozess;
Kopieren der Schreibdaten, d. h. des Objekts, das mit einem für den Kindprozess eindeutigen kryptographischen Schlüssel erneut verschlüsselt wird, auf die neue physische für den Kindprozess private Seite; und
Füllen des Rests der neuen physischen für den Kindprozess privaten Seite im Speicher (704, 720) mit Magic-Marker-Daten.

9. Verfahren nach Anspruch 8, ferner umfassend:
Entschlüsseln von Daten von der entsprechenden Seite in dem Elternprozess unter Verwendung eines für den Elternprozess eindeutigen kryptographischen Schlüssels;
Verschlüsseln der Daten von der entsprechenden Seite in dem Elternprozess unter Verwendung des für den Kindprozess eindeutigen kryptographischen Schlüssels; und
Schreiben der Daten von der entsprechenden Seite in dem Elternprozess auf die neue physische Seite im Speicher (704, 720) für den Kindprozess.

10. Verfahren nach einem der Ansprüche 8 - 9, ferner umfassend:
Auslösen einer Ausnahme in einem Softwareprozess.

11. Verfahren nach einem der Ansprüche 8 - 10, ferner umfassend:
Verschlüsseln der Daten von der entsprechenden Seite in dem Elternprozess unter Verwendung von dem Kindprozess eindeutig zugeordneten Allokationsmetadaten.

12. Verfahren nach einem der Ansprüche 8 - 11, ferner umfassend:
Detektieren eines Copy-on-Write in dem Kindprozess; und
Zuweisen einer neuen physischen für den Elternprozess privaten Seite im Speicher (704, 720) zu dem Elternprozess.

13. Verfahren nach einem der Ansprüche 8 - 12, ferner umfassend:
Verschlüsseln der Daten von der entsprechenden Seite in dem Elternprozess als Reaktion auf einen Zugriffsfehler in Bezug auf lineare Inline-Metadaten, LIM, in dem Kindprozess.

14. Verfahren nach einem der Ansprüche 11 oder 13,
wobei gültige Metadatenpositionen unter Verwendung eines Out-of-Band-Indikators für jede Metadatenposition angezeigt werden.

## Revendications

1. Appareil comprenant des circuits de traitement (702) pour :
détecter l'exécution d'une opération fork() dans un système informatique cryptographique qui génère un processus parent et un processus enfant ;
affecter une structure de données du noyau parent au processus parent et une structure de données du noyau enfant au processus enfant ;
détecter, dans le processus enfant, une opération d'écriture comportant des données d'écriture et une adresse cible cryptographique, les données d'écriture consistant en un objet, et, en réponse à l'opération d'écriture :
bloquer l'accès à une page correspondante dans le processus parent ;
allouer une nouvelle page physique privée enfant en mémoire (704, 720) pour le processus enfant ;
copier les données d'écriture, c'est-à-dire l'objet qui est re-crypté avec une clé cryptographique unique au processus enfant, dans la nouvelle page physique privée enfant ; et
remplir le reste de la nouvelle page physique privée enfant en mémoire (704, 720) avec des données de marqueur magique.

2. Appareil selon la revendication 1,
dans lequel les données de marqueur magique comprennent un code unique qui amène le processeur à :
décrypter les données de la page correspondante dans le processus parent en utilisant une clé cryptographique unique au processus parent ;
crypter les données de la page correspondante dans le processus parent à l'aide de la clé cryptographique unique au processus enfant ; et
écrire les données de la page correspondante dans le processus parent dans la nouvelle page physique en mémoire (704, 720) pour le processus enfant.

3. Appareil selon l'une quelconque des revendications 1 à 2,
dans lequel les données de marqueur magique comprennent un code unique qui amène le processeur à :
déclencher une exception dans un processus logiciel.

4. Appareil selon l'une quelconque des revendications 1 à 3, dans lequel les circuits de traitement (702) sont destinés à :
détecter une copie sur écriture dans le processus enfant ; et
allouer une nouvelle page physique privée en mémoire (704, 720) pour le processus parent.

5. Appareil selon l'une quelconque des revendications 1 à 4, dans lequel les circuits de traitement (702) sont destinés à :
crypter les données de la page correspondante dans le processus parent à l'aide de métadonnées d'allocation uniques au processus enfant.

6. Appareil selon l'une quelconque des revendications 1 à 5, dans lequel les circuits de traitement (702) sont destinés à :
crypter les données de la page correspondante dans le processus parent en réponse à une erreur d'accès à des métadonnées linéaires en ligne, LIM, dans le processus enfant.

7. Appareil selon l'une quelconque des revendications 5 à 6,
dans lequel des emplacements de métadonnées valides sont indiqués au moyen d'un indicateur hors bande pour chaque emplacement de métadonnées.

8. Procédé, comprenant :
la détection de l'exécution d'une opération fork() dans un système informatique cryptographique qui génère un processus parent et un processus enfant ;
l'affectation d'une structure de données du noyau parent au processus parent et d'une structure de données du noyau enfant au processus enfant ;
la détection, dans le processus enfant, d'une opération d'écriture comportant des données d'écriture et une adresse cible cryptographique, les données d'écriture consistant en un objet, et, en réponse à l'opération d'écriture :
le blocage de l'accès à une page correspondante dans le processus parent ;
l'allocation d'une nouvelle page physique privée enfant en mémoire (704, 720) pour le processus enfant ;
la copie des données d'écriture, c'est-à-dire de l'objet qui est re-crypté avec une clé cryptographique unique au processus enfant, dans la nouvelle page physique privée enfant ; et
le remplissage du reste de la nouvelle page physique privée enfant en mémoire (704, 720) avec des données de marqueur magique.

9. Procédé de la revendication 8, comprenant en outre :
le décryptage des données de la page correspondante dans le processus parent à l'aide d'une clé cryptographique unique au processus parent ;
le cryptage des données de la page correspondante dans le processus parent à l'aide de la clé cryptographique unique au processus enfant ; et
l'écriture des données de la page correspondante dans le processus parent dans la nouvelle page physique en mémoire (704, 720) pour le processus enfant.

10. Procédé selon l'une quelconque des revendications 8 à 9, comprenant en outre :
le déclenchement d'une exception dans un processus logiciel.

11. Procédé selon l'une quelconque des revendications 8 à 10, comprenant en outre :
le cryptage des données de la page correspondante dans le processus parent à l'aide de métadonnées d'allocation uniques au processus enfant.

12. Procédé selon l'une quelconque des revendications 8 à 11, comprenant en outre :
la détection d'une copie sur écriture dans le processus enfant ; et
l'attribution d'une nouvelle page physique privée en mémoire (704, 720) pour le processus parent.

13. Procédé selon l'une quelconque des revendications 8 à 12, comprenant en outre :
le cryptage des données de la page correspondante dans le processus parent en réponse à une erreur d'accès à des métadonnées linéaires en ligne, LIM, dans le processus enfant.

14. Procédé selon l'une quelconque des revendications 11 ou 13,
dans lequel des emplacements de métadonnées valides sont indiqués au moyen d'un indicateur hors bande pour chaque emplacement de métadonnées.
